# EUROPEAN PATENT APPLICATION

(11) **EP 4 711 281 A1**
(43) Date of publication of application: **18.03.2026**
(21) Application number: 25201399.0
(22) Date of filing: 10.09.2025
(51) Int. Cl.: B64G 1/64

(54) **SPACECRAFT HAVING A BLADE OPERABLE TO SEVER A ROPE SECURING A DEPLOYABLE SPACECRAFT PACKAGE AND ASSOCIATED METHODS**

(30) Priority: 16.09.2024 US 202418885804
(71) Applicant: Eagle Technology, LLC, Melbourne, FL 32919 (US)
(72) Inventor: LOPEZ, David, Malabar, 32955 (US); JENKINS, Stephen, Palm Bay, 32905 (US); TAYLOR, Robert M., Rockledge, 32955 (US); CORNETT, James, Lago Vista, 78645 (US); REES, David, Palm Bay, 32909 (US); CARRO, John, Melbourne, 32934 (US)
(74) Representative: Schmidt, Steffen J.

(57) **Abstract**

A spacecraft **20** includes a spacecraft package **22** movable between stored and deployed positions. A rope **28** may secure the spacecraft package **22** in the stored position. The rope **28** may have a first end **28a** and a second end **28b** opposite the first end. A tension lock **50** may be coupled to the first end **28a** of the rope **28** to maintain the rope at an initial tension. A take-up mechanism **54** may be adjacent the first end **28a** of the rope **28.** A melting blade **66** may be selectively operable to melt and sever the rope **28** adjacent the second end **28b** thereof so that the rope is released at the second end, retrieved onto the take-up mechanism **54,** and the spacecraft package **22** is released from the stored position to move to the deployed position.

## Description

### Field of the Invention

The present invention relates to the field of spacecraft, and, more particularly, to spacecraft having deployable spacecraft packages, such as an antenna and related methods.

### Background of the Invention

Various spacecraft and payload configurations require restraint devices to safely constrain spacecraft packages, e.g., a deployable antenna, through specific conditions, such as the spacecraft launch and maneuvers made during flight. Spacecraft missions often require the restraint devices to release and permit the spacecraft packages or payload to move freely without excessive force. Some release mechanisms are lightweight and compact and employ explosive charges to rapidly move a pin, cut a bolt, or separate a nut to remove a load carrying path. Unfortunately, the explosive charge and rapid load change typically creates high shock forces that may damage adjacent electronics or other sensitive structural elements.

Some recent release mechanisms operable with spacecraft restraint devices replace explosive charge actuation and are designed to lower shock by using shape memory alloys, wax, or piezoelectric actuation. The reduced force output of these release mechanisms, however, is amplified or concentrated into separate load paths. Therefore, these mechanisms are generally heavy, bulky, and more complex, and even then still generate significant shock when the load path is abruptly changed. Some of these release mechanisms are distinct, qualified devices that have a limited effect, and usually employed on a single component, such as a panel bolt carrying limited load capability.

To restrain larger systems, such as large deployable antennas, multiple restraint devices may be used in different locations to leverage the effect of the release over a broader area. The restraint devices may also be located to minimize interference with the structure of the release mechanism or any cables that are required to initiate release. This approach becomes more complicated when multiple release mechanisms are used.

Currently, the restraint devices employed on spacecraft tend to be high shock, low preload, and limited in the size and area of the load path that is released. Examples of high shock and low preload restraints include cams and pyrotechnic devices or tension links. Medium shock and low distance movement devices may include a compression/torque assembly and bolt cutters or separation nuts, while low shock systems have a generally low restraint force, such as burning a wire.

Some stacked satellite applications have been incorporated that may include a release mechanism, for example, a bar that holds down an entire stack of smaller satellites, but then is released at either end to float free into a low orbit. Releasing debris may not be desirable since the debris may interfere with the released satellites. Solar array panels have also been stacked with the bolts extending through the stack to hold the stack preloaded against the spacecraft in multiple locations. A release nut may be used to allow each bolt to travel away with the outermost panel. Most of these systems, however, have complex components with multiple release mechanisms making them heavy and difficult in operation to mitigate shock, while also taking up increasing space requirements in the spacecraft.

### Summary of the Invention

A spacecraft may comprise a spacecraft package movable between stored and deployed positions. A rope may secure the spacecraft package in the stored position. The rope may have a first end and a second end opposite the first end. A tension lock may be coupled to the first end of the rope to maintain the rope at an initial tension. A take-up mechanism may be adjacent the first end of the rope. A melting blade may be selectively operable to melt and sever the rope adjacent the second end thereof so that the rope is released at the second end, retrieved onto the take-up mechanism, and the spacecraft package is released from the stored position to move to the deployed position.

The rope may comprise a stranded aromatic polyester rope. A plurality of snubbers may be carried by the spacecraft package and surrounding the rope. The take-up mechanism may comprise a spool and a biasing member associated therewith. The tension lock may comprise a rope hook and a tensioning device associated therewith.

The melting blade may comprise a pivotable arm, and a heating element carried by an end of the pivotable arm. The heating element may comprise a heater body and a pair of heating elements carried on opposite sides thereof. The spacecraft package may comprise a deployable antenna. The deployable antenna may comprise a plurality of spring-loaded antenna sections.

Another aspect is directed to a method for moving a spacecraft package between stored and deployed positions. The method may comprise securing the spacecraft package in the stored position with a rope with the rope having a first end and a second end opposite the first end. The method may further include maintaining the rope at an initial tension using a tension lock coupled to the first end of the rope, and selectively operating a melting blade to melt and sever the rope adjacent the second end thereof so that the rope is released at the second end, retrieved onto a take-up mechanism adjacent the second end, and the spacecraft package is released from the stored position to move to the deployed position.

### Brief Description of the Drawings

Other objects, features and advantages of the present invention will become apparent from the detailed description of the invention which follows, when considered in light of the accompanying drawings in which:
FIG. 1 is an isometric view of the spacecraft having a rope securing a spacecraft package as a deployable antenna and a melting blade to melt and sever the rope and deploy the antenna according to the invention.
FIG. 2 is another isometric view of the spacecraft of FIG. 1 showing the antenna in a partially deployed position.
FIG. 3 is an isometric view of a top segment of the antenna showing snubbers between the antenna ribs, a take-up mechanism, and melting blade.
FIG. 4 is an enlarged isometric view of a snubber and melting blade at the second end of the rope in FIG. 3.
FIG. 5 is an enlarged isometric view of the second end of the rope and the melting blade.
FIG. 6 is an enlarged isometric view of the take-up mechanism at the first end of the rope.
FIG. 7 is another enlarged isometric view of the take-up mechanism showing the tension lock.
FIG. 8 is a schematic, phantom sectional view of the take-up mechanism showing the spool and biasing member.
FIG. 9 is a schematic, phantom isometric view of the spool and biasing member of FIG. 8.
FIG. 10 is a high-level flowchart of a method for moving the spacecraft package shown in FIG. 1 between stowed and deployed positions.

### Detailed Description

The present description is made with reference to the accompanying drawings, in which exemplary embodiments are shown. However, many different embodiments may be used, and thus, the description should not be construed as limited to the particular embodiments set forth herein. Rather, these embodiments are provided so that this disclosure will be thorough and complete. Like numbers refer to like elements throughout, and prime notation is used to indicate similar elements in different embodiments.

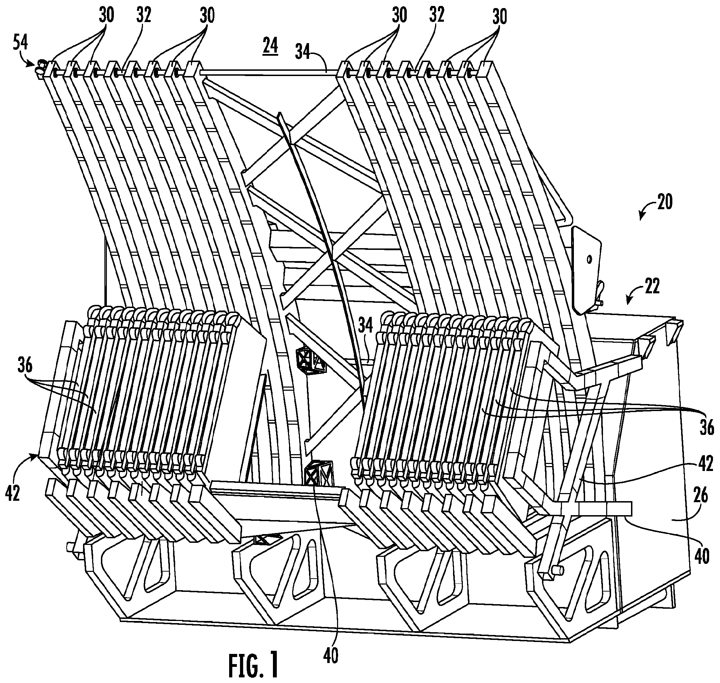

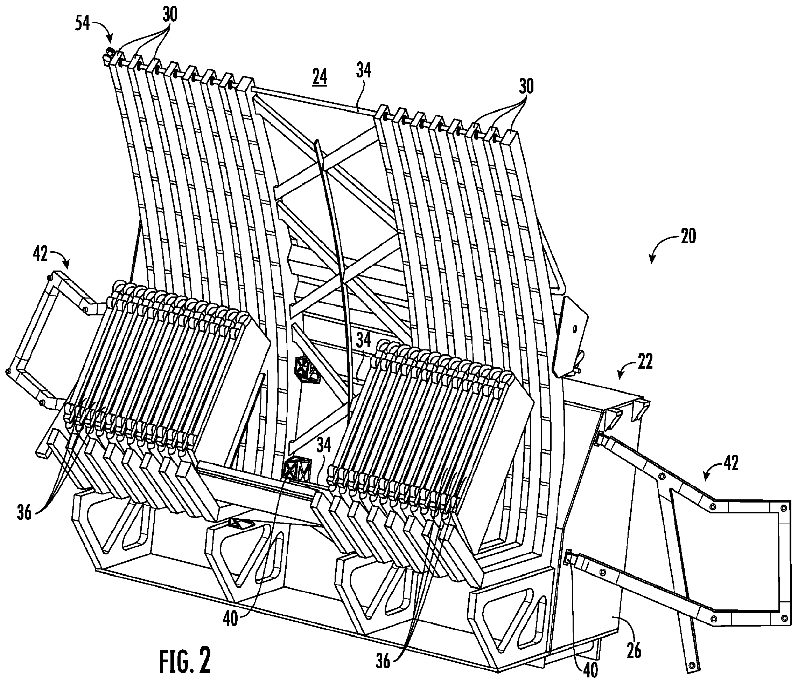

Referring now to FIGS. 1 and 2, there are illustrated the spacecraft **20** that includes a spacecraft package **22** configured in this example as a deployable antenna **24** mounted on a spacecraft frame **26** and movable between the stored (FIG. 1) and deployed positions, where a partially deployed position for the antenna is shown in FIG. 2. Although the spacecraft package **22** is described throughout this description as a deployable reflector antenna **24**, the spacecraft **20** may incorporate other deployable spacecraft packages, such as movable truss supports, telescopes, radar devices, and similar deployable spacecraft mechanisms.

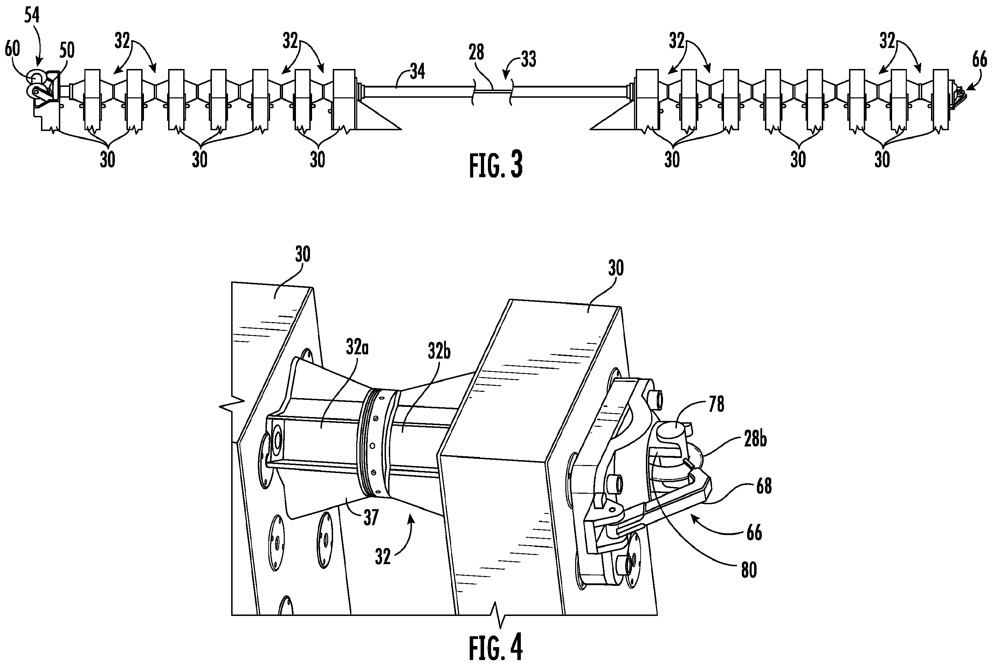

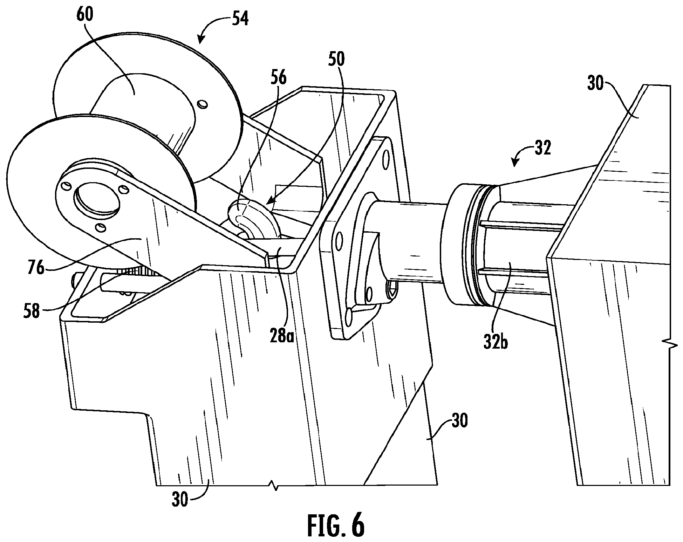

A rope **28** secures the spacecraft package **22** in the stored position as shown in the cut-away segment **33** of FIG. 3. In the example spacecraft **20**, a plurality of ropes **28** arranged in rows are used. Each rope **28** has a first end **28a** and a second end **28b** opposite the first end as shown in the enlarged views of FIGS. 4 and 6. In this example, the spacecraft package **22** as a deployable reflector antenna **24** includes a plurality of antenna ribs **30** with snubbers **32** formed as snubber restraints positioned between the ribs and surrounding the rope as shown in FIG. 3, and in a cut-away segment **33** of the central, elongated snubber **34** in FIG. 3, illustrating the rope passing therethrough **28.** A first set of eight antenna ribs **30** are on the left side of the antenna **24**, and a second set of eight antenna ribs **30** are on the right side with the rope **28** securing the antenna ribs in a stored position. The top section of the antenna ribs **30** is illustrated in FIG. 3 with the snubbers **32** positioned between and supported by the antenna ribs as part of the spacecraft package **22** and surrounding the rope **28**. The central, elongated snubber **34** extends between the left and right sets of antenna ribs **30** and surrounds the rope **28,** which is exposed in the cut-away segment **33**.

In the example of FIGS. 1 and 2, three rows of snubbers **32** are supported on the antenna ribs **30,** each surrounding a separate rope **28**. Associated with each left and right set of antenna ribs **30** are left and right sets of array members **36** and array snubbers **32** supported by and positioned between the array members and surrounding the ropes **28** that hold the array members together with the antenna ribs **30** in a stored position. Each array member **36** supports array snubbers **32** that surround the rope **28**. Although not illustrated in detail, each left and right array member **36** set supports four rows of ropes **28** and snubbers **32**.

The antenna ribs **30** and array members **36** form the antenna sections that include spring-loaded hinges or other spring-loaded antenna sections **40**, including wing arms **42**. Upon melting and severing of the ropes **28**, the wing arms **42** rotate away from the array members **36** and the antenna ribs **30**, followed by the array members and antenna ribs extending out so that the antenna **24** reflector may deploy from the spacecraft **20**. The spacecraft **20** of FIG. 2 shows the wing arm **42** on the right side fully deployed, and the wing arm on the left side partially deployed, which may occur as the rope **28** is melted and severed slowly as described below. Once the wing arms **42** are deployed, the array members **36** and antenna ribs **30** may deploy and extend so that the antenna **24** is in a deployed position forming a reflective antenna for the spacecraft **20**.

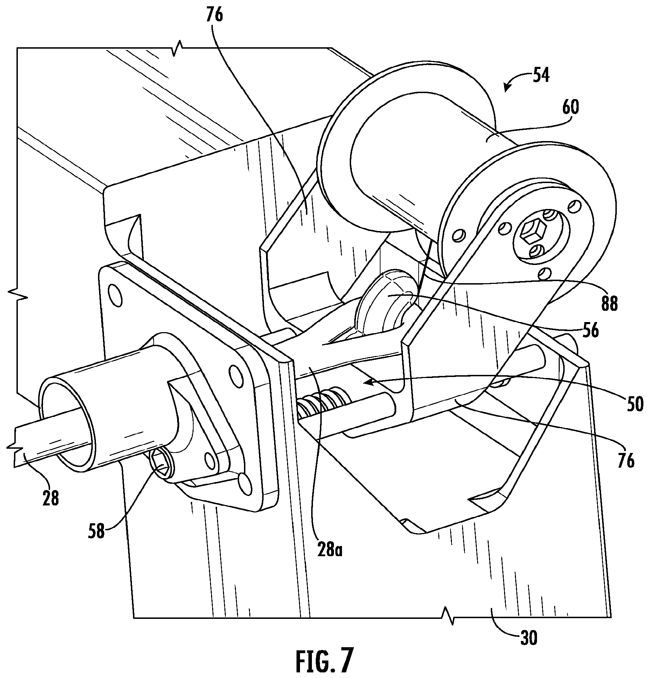

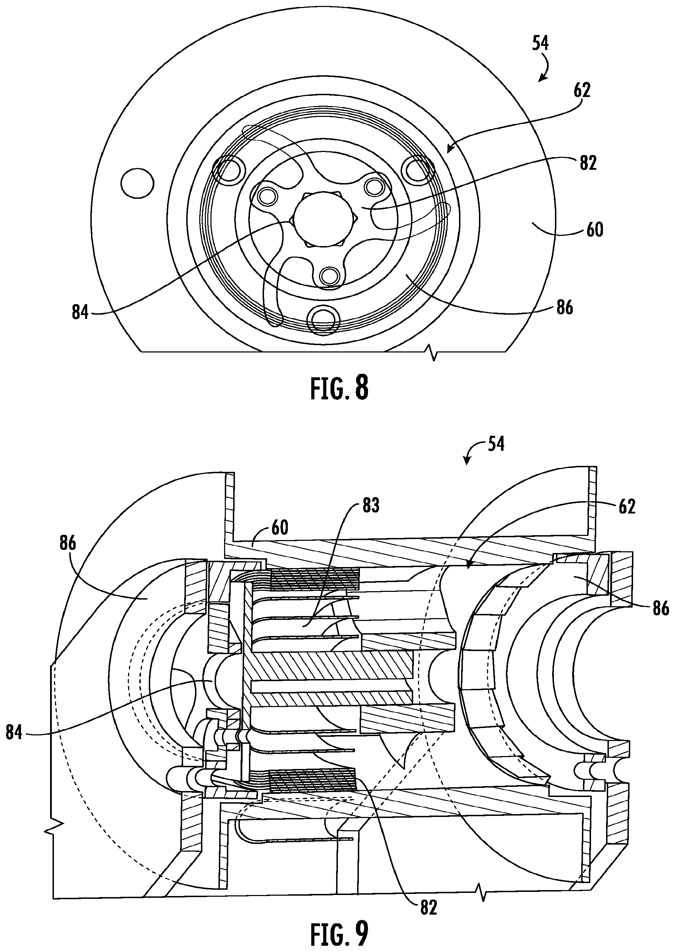

In the example of the partial view in FIG. 3 showing the top section of the antenna ribs **30**, a tension lock **50** is formed at the left most antenna rib and coupled to the first end **28a** of the rope to maintain the rope in its initial tension (FIGS. 6 and 7). A take-up mechanism **54** is adjacent this first end **28a** of the rope **28**. The tension lock **50** includes a rope hook **56** and a tensioning device **58** such as a tension screw associated therewith (FIG. 7). The take-up mechanism **54** includes a spool **60** and biasing member **62** as shown in FIGS. 8 and 9.

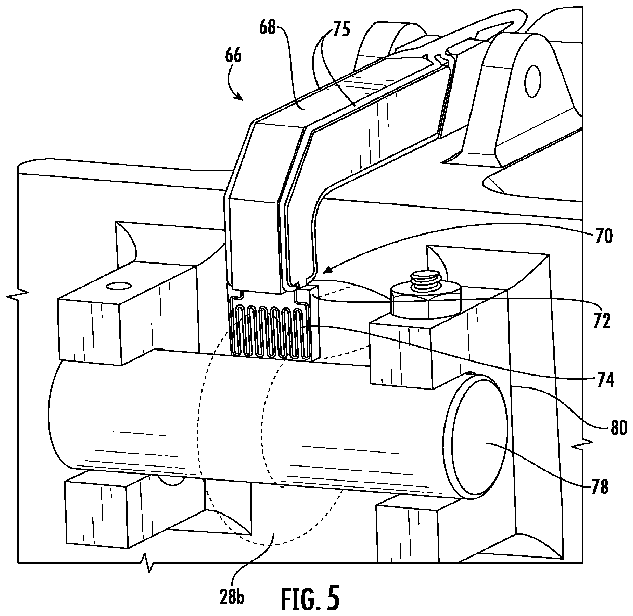

A melting blade **66** is selectively operable to melt and sever the rope **28** adjacent the second end **28b** thereof so that the rope is released at its second end and retrieved onto the take-up mechanism **54**. The melting blade **66** may encompass different shapes and profiles that can be configured for tuning cut quality, speed of melt, power consumption and other variables. It may encompass different designs and configurations, including a loop of solid wire like a D-shaped ring or configured as a member having different configurations such as straight, curved, serrated, open or closed loop, or other shapes and sizes. The spacecraft package **22** as the deployable antenna **24** in this example is released to move to the deployed position after the rope **28** is melted and severed at its secured end **28b**. The melting blade **66** includes a pivotable arm **68** (FIGS. 4 and 5). A heating element **70**, shown in greater detail in FIG. 5, is carried at the end of the pivotable arm **68**. The heating element **70** includes a heater body **72** and a pair of heating elements **74** carried on opposite sides thereof. Heater wires **75** are carried on the pivotable arm **68** and provide power to the heating element **70**.

As noted before, the left and right sets of antenna ribs **30** carry three rows of snubbers **32** that surround the respective ropes **28**. The snubbers **32** operate as mechanical restraints that help absorb excessive force in the spacecraft package **22** as the antenna ribs **30** and array members **36** deploy outward, and operate in conjunction with the rope **28** that is slowly melted and severed a strand at a time by the melting blade **66.** In an example, the rope **28** is formed as a stranded aromatic polyester rope, e.g., a liquid crystal polymer manufactured under the tradename Vectran^{™}, available from Kuraray America, Inc. of Fort Mill, SC, that may melt and cut slowly under the melting and cutting action of the melting blade **66.** The rope **28** formed from this material does not have substantial creep and will maintain its tension during antenna **24** storage. For example, the rope **28** may be a 12 strand aromatic polyester rope, have a 5/16 diameter, and looped ends forming the first and second ends **28a**, **28b**.

As shown in FIGS. 6 and 7, the first end **28a** of the rope **28** is formed as a loop and received over the rope hook **56** as part of the tension lock **50.** The rope hook **56** is carried by a support bracket **76** (FIG. 7) that also carries the take-up mechanism **54**, which includes the spool **60** and biasing member **62** (FIGS. 8 and 9). The tensioning device **58** is formed as a tension screw that extends through the top section first, or left-most antenna rib **30** shown in FIGS. 1 and 2, and when rotated, may move the support bracket **76** and loosen or tighten the rope **28** depending on the direction the tension screw is rotated. A similar structure of a support bracket **76** carrying the rope hook **56** as part of the tension lock **50** may be used for the array members **36.**

The second end **28b** of the rope **28** is formed as a loop and positioned at the melting blade **66** as shown in FIGS. 4 and 5, where the second end **28b** loop is received over a cylindrical support pin **78** that is received and fastened by bolts or other fasteners onto an anchor bracket **80** that is secured to the last or right-hand side antenna rib **30**. A similar structure may be used for the array members **36**.

In operation, the rope **28** is tensioned via the tensioning device **58** as its tension screw is rotated to move the rope hook **56** and take-up mechanism **54** outward in a direction away from the antenna rib **30** or array member **36** on which it is supported. When the antenna **24** is to be deployed, the pivotable arm **68** carrying the heating element **70** is pivoted downward against the rope **28** (FIG. 5).

The rope **28** is slowly melted, for example, a strand at a time, so that the complete severing or release of the rope occurs over a period of a few seconds instead of immediately. For example, the melting and cutting of the rope **28** may occur over a 3 to 5 second time period. The wing arms **42**, antenna ribs **30** and array members **36** are spring biased outward into a deployed position after the ropes **28** are melted and severed. The wing arms **42** may extend outward first, as shown in the initial extension of the wing arms in FIG. 2, followed by the antenna ribs **30** and array members **36**. There is less force applied to any electronic components and the various structural members of the spacecraft **20** and spacecraft package **22** since the forces are released over a 3 to 5 second time period.

At the same time as the rope **28** tension is released from the melting and cutting action of the melting blade **66**, the biasing member **62,** which includes a spring cartridge **82** having a spring member **83** and an impeller pawl **84** (FIG. 9) with ratchet gears **86**, biases the take-up spool **60** counterclockwise so that a guide wire **88** connected to the first end **28a** of the rope **28** begins to wind over the take-up spool and pull the rope around the spool. As the antenna ribs **30** and array members **36** deploy outward, the rope **28** is coiled up and is not loose and cannot catch and snag any of the deployed antenna ribs **30**, array members **36,** or wing arms **42.**

The spring cartridge **82** includes its spring member **83** that is initially rotated clockwise to induce a counterclockwise torque into the spool **60**. The ratchet gears **86** lock against gear teeth and spin the spool **60** in a counterclockwise direction once the rope **28** is melted and severed. A stop pin or other stop member may be configured to stop spool rotation while the spring cartridge **82** is loaded and tensions the rope **28**. Solar panels mounted on the spacecraft may provide energy to the various components of the spacecraft, such as heater wires **75** carried by the pivotable arm **68**, which connect to the heating element **70** to power the heating element during melting and cutting of the rope **28** (FIG. 5).

The snubbers **32** carried by the spacecraft package **22** as the deployable antenna **24** on the antenna ribs **30** and array members **36**, surround the rope **28** as shown in FIGS. 3 and 4, and may have different configurations. In this example, the snubbers **32** may include opposing fittings **32a**, **32b** (FIG. 4) with an internal ball and cup stress relief mechanism and mounting interfaces that includes support ribs **37**. The snubbers **32** aid in suppressing forces as the rope **28** is melted and cut. The array members **36** may also include different types of snubbers compared to those illustrated in FIGS. 3 and 4, but the cumulative effect of all the snubbers will be the same to suppress forces. The snubbers **32** also provide alignment for the antenna ribs **30** and array members **36**.

In an example, each rope **28** is a stranded aromatic polyester rope formed from Vectran^{™} and may be 5/16 inch in diameter and weigh about 3.2 pounds per 100 foot of rope length. It may include a minimum tensile strength (spliced) of about 11,700 pounds, and 13,000 pounds (ISO unspliced rope). Each rope **28** may be pre-cycled to remove constructional stretch and may be loaded higher than a final desired load to accommodate creep. The rope **28** formed from Vectran^{™} has excellent off-gassing characteristics. To help minimize total weight of the spacecraft **20,** the tension lock **50,** the take-up mechanism **54** forming the spool **60** and the biasing member **62** and the rope hook **56,** and tensioning device **58** may be formed of a nonmetallic material such as a high performance polymer material.

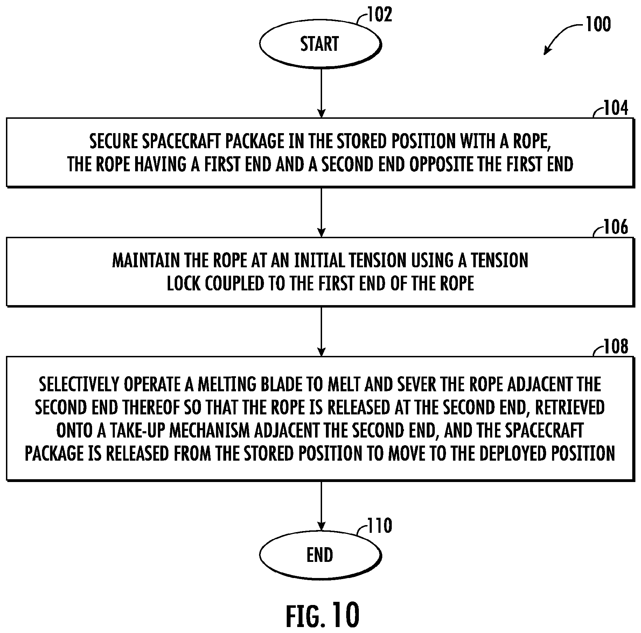

Referring now to FIG. 10, there is illustrated generally at **100** a flowchart showing an example for moving a spacecraft package **22** between stored and deployed positions. The method starts (Block **102**) and includes securing the spacecraft package **22** in the stored position with the rope **28**, the rope having a first end **28a** and a second end **28b** opposite the first end (Block **104**). The method includes maintaining the rope **28** at an initial tension using a tension lock **50** coupled to the first end **28a** of the rope **28** (Block **106**). A melting blade **66** is selectively operated to melt and sever the rope **28** adjacent the second end **28b** thereof so that the rope is released at the second end, retrieved onto a take-up mechanism **54** adjacent the second end, and the spacecraft package **22** is released from the stored position to move to the deployed position (Block **108**). The process ends (Block **110**).

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A spacecraft comprising:
a spacecraft package movable between stored and deployed positions;
a rope securing the spacecraft package in the stored position, the rope having a first end and a second end opposite the first end;
a tension lock coupled to the first end of the rope to maintain the rope at an initial tension;
a take-up mechanism adjacent the first end of the rope; and
a melting blade selectively operable to melt and sever the rope adjacent the second end thereof so that the rope is released at the second end, retrieved onto the take-up mechanism, and the spacecraft package is released from the stored position to move to the deployed position.

2. The spacecraft of claim 1, wherein the rope comprises a stranded aromatic polyester rope.

3. The spacecraft of claim 1, comprising a plurality of snubbers carried by the spacecraft package and surrounding the rope.

4. The spacecraft of claim 1, wherein the take-up mechanism comprises a spool and a biasing member associated therewith.

5. The spacecraft of claim 1, wherein the tension lock comprises a rope hook and a tensioning device associated therewith.

6. The spacecraft of claim 1, wherein the melting blade comprises a pivotable arm, and a heating element carried by an end of the pivotable arm.

7. A method for releasing a spacecraft package from a stored position to move to a deployed position, the method comprising:
securing the spacecraft package in the stored position with a rope, the rope having a first end and a second end opposite the first end;
maintaining the rope at an initial tension using a tension lock coupled to the first end of the rope; and
selectively operating a melting blade to melt and sever the rope adjacent the second end thereof so that the rope is released at the second end, retrieved onto a take-up mechanism adjacent the second end, and the spacecraft package is released from the stored position to move to the deployed position.

8. The method of claim 7, wherein the rope comprises a stranded aromatic polyester rope.

9. The method of claim 7, comprising a plurality of snubbers carried by the spacecraft package and surrounding the rope.

10. The method of claim 7, wherein the take-up mechanism comprises a spool and a biasing member associated therewith.
